# EUROPÄISCHE PATENTANMELDUNG

(11) **EP 3 620 432 A1**
(43) Veröffentlichungstag der Anmeldung: **11.03.2020**
(21) Anmeldenummer: 18193179.1
(22) Anmeldetag: 07.09.2018
(51) Int. Cl.: C01B 21/082, C01B 21/087, C07F 11/00, C07C 211/65, C07F 7/00, C07F 9/00, C23C 16/18, C23C 16/30, H01L 21/02

(54) **VERFAHREN ZUR HERSTELLUNG VON DIALKYLAMIDO-ELEMENTVERBINDUNGEN**

(71) Anmelder: UMICORE AG & CO. KG, 63457 Hanau-Wolfgang (DE)
(72) Erfinder: SUNDERMEYER, Joerg, 35041 Marburg (DE); PULZ, Susanne, 35037 Marburg (DE)

(57) **Zusammenfassung**

Die vorliegende Erfindung betrifft ein Verfahren zur Herstellung von Dialkylamido-Elementverbindungen. Sie betrifft insbesondere ein Verfahren zur Herstellung von Dialkylamido-Elementverbindungen des Typs E(NRR')ₓ, bei dem zunächst M[AlH₄] mit HNRR' zu M[Al(NRR')₄] und Wasserstoff und anschließend das gebildete M[Al(NRR')₄] mit EXₓ zu E(NRR')ₓ und M[AlX₄] umgesetzt wird, wobei M = Li, Na oder K ist, R = CₙH₂ₙ₊₁ mit n = 1 bis 20 und unabhängig davon R' = CₙH₂ₙ₊₁ mit n = 1 bis 20 ist, E ein Element der Gruppen 3 bis 15 des Periodensystems der Elemente ist, X = F, Cl, Br oder I ist und x = 2, 3, 4 oder 5 ist.

## Beschreibung

Die vorliegende Erfindung betrifft ein Verfahren zur Herstellung von Dialkylamido-Elementverbindungen. Sie betrifft insbesondere ein Verfahren zur Herstellung von Dialkylamido-Elementverbindungen des Typs E(NRR')ₓ, bei dem zunächst M[AlH₄] mit HNRR' zu M[Al(NRR')₄] und Wasserstoff und anschließend das gebildete M[Al(NRR')₄] mit EXₓ zu E(NRR')ₓ und M[AlX₄] umgesetzt wird, wobei M = Li, Na oder K ist, R = CₙH₂ₙ₊₁ mit n = 1 bis 20 und unabhängig davon R' = CₙH₂ₙ₊₁ mit n = 1 bis 20 ist, E ein Element der Gruppen 3 bis 15 des Periodensystems der Elemente, bevorzugt Ti, Zr, Ta, Nb, Bi, As, P, B, Si oder Ge ist, X = F, Cl, Br oder I ist und x = 2, 3, 4 oder 5 ist.

Flüchtige homoleptische Metall- und Nichtmetall-Amide sekundärer Amine mit einem hohen Dampfdruck, wie beispielsweise Ti(NMe₂)₄, Zr(NMeEt)₄, Ta(NMe₂)₅, Ta(NMeEt)₄, Nb(NMe₂)₅, Bi(NMe₂)₃, As(NMe₂)₃, P(NMe₂)₃, B(NMe₂)₃, Si(NMe₂)₄, Ge(NMe₂)₄, dienen als Quellen für die Gasphasenabscheidung von Element- bzw. Metall-Nitriden und -Nitridcarbiden nach dem MOCVD- oder MOVPE-Verfahren oder auch nach dem ALD-Verfahren. Die Metallnitride werden unter anderem als elektrokeramische Diffusionsbarrieren für Kupfer bei der Kontaktierung immer kleinerer, nanostrukturierter Silizium-Wafer-Halbleiterbauteile in integrierten Schaltungen eingesetzt. Die Nichtmetall-Nitride BN oder Si₃N₄ wiederum sind wichtige "*high-k*"-Materialien, also Isolatoren besonderer Güte, oder sie finden Anwendung bei der Oberflächenvergütung durch keramische Hartstoffschichten. Bi(NMe₂)₃, As(NMe₂)₃ und P(NMe₂)₃ können als reaktive Quellen für Bi, As oder P in der Produktion und Dotierung von III-V-Halbleitern dienen.

Metallamide werden häufig durch Reaktion von *in situ* generierten Lithiumamiden LiNRR' mit Metallchloriden in Kohlenwasserstoffen hergestellt. In seltenen Fällen sind auch Ether als Lösungsmittel genannt. Bei der Verwendung von Ethern besteht allerdings die Gefahr der Etherspaltung durch Reaktion der Lithiumalkyle, bevor diese mit Aminen zu Lithiumamiden umgesetzt werden, sowie die Gefahr der Kontamination der Amide mit Sauerstoff-Verunreinigungen. Über Etherate von Li[Al(NMe₂)₄] berichten H. Nöth et al. in Z. Naturforsch. 43b, 53-60 (1988).

Weitere Nachteile der klassischen Syntheseroute sind:
1. eine hohe Salzfracht (je ein Äquivalent LiCI pro Halogen): In großen Mengen entstehender Feststoff kann im Prozess zu Problemen bei Durchmischung führen, Feststoff muss abfiltriert werden; je nach verwendetem Lösungsmittel ist das entstehende Salz (LiCI) relativ gut löslich und damit schwer vollständig abtrennbar.
2. eine hohe Enthalpie bei Zugabe LiNMe₂: Wärme muss gut abgeführt werden, während gleichzeitig meistens niedrige Reaktionstemperaturen gefordert sind um die Zielprodukte nicht zu zersetzen.
3. LiNMe₂ ist bei Einsatz als Lösung nur gering löslich (niedrige molare Konzentrationen): damit sind hohe Lösungsmittel-Mengen notwendig und es resultieren niedrige Raum-Zeit-Ausbeuten.
4. Produkte sind je nach verwendetem Lösungsmittel schwer abtrennbar.
5. Verunreinigungen durch organische Lösungsmittel.

Es war daher die Aufgabe der vorliegenden Erfindung, eine alternative Syntheseroute für Dialkylamido-Elementverbindungen bereitzustellen, die die zuvor beschriebenen Nachteile des Standes der Technik überwindet. Insbesondere soll die alternative Syntheseroute hochselektiv in Bezug auf die Zielverbindungen sein.

Es wurde nun überraschend gefunden, dass die in nahezu quantitativer Ausbeute isolierbaren oder auch *in situ* erzeugbaren Verbindungen des Typs M[Al(NRR')₄] in der Lage sind, die Aluminium-gebundenen Amidgruppen mit Elementhalogeniden von Metallen und Nichtmetallen auszutauschen. Neben den Zielverbindungen des Typs E(NRR')ₓ werden dabei die im Gegensatz zu LiCI besonders leicht abtrennbaren Tetrahaloaluminate M[AlX₄] gebildet.

Denkbar ist auch die Herstellung von heteroleptischen Verbindungen E(NRR')ₓX_{y}, in denen die Halogenidliganden nur teilweise durch Amidliganden ersetzt sind, indem nur die stöchiometrisch benötigte Menge an M[Al(NRR')₄] eingesetzt wird. Die heteroleptischen Verbindungen können dann mit bekannten Methoden weiter funktionalisiert werden, z. B. Einführung von Alkylgruppen, Einführung anderer Amidliganden, etc.

Gegenstand der vorliegenden Erfindung ist daher ein Verfahren zur Herstellung von Verbindungen des Typs E(NRR')ₓ umfassend die folgenden Schritte:
a) Umsetzung von M[AlH₄] mit HNRR' zu M[Al(NRR')₄] und Wasserstoff;
b) Umsetzung von M[Al(NRR')₄] mit EXₓ zu E(NRR')ₓ und M[AlX₄],
wobei M = Li, Na oder K ist, R = CₙH₂ₙ₊₁ mit n = 1 bis 20 und unabhängig davon R' = CₙH₂ₙ₊₁ mit n = 1 bis 20 ist, E ein Element der Gruppen 3 bis 15 des Periodensystems der Elemente, bevorzugt Ti, Zr, Ta, Nb, Bi, As, P, B, Si oder Ge ist, X = F, Cl, Br oder I ist und x = 2, 3, 4 oder 5 ist.

Im Sinne der vorliegenden Erfindung werden R und R' unabhängig voneinander ausgewählt aus der Gruppe bestehend aus CH₃ (n=1), C₂H₅ (n=2), C₃H₇ (n=3), C₄H₉ (n=4), C₅H₁₁ (n=5), C₆H₁₃ (n=6), C₇H₁₅ (n=7), C₈H₁₇ (n=8), C₉H₁₉ (n=9), C₁₀H₂₁ (n=10), C₁₁H₂₃ (n=11), C₁₂H₂₅ (n=12), C₁₃H₂₇ (n=13), C₁₄H₂₉ (n=14), C₁₅H₃₁ (n=15), C₁₆H₃₃ (n=16), C₁₇H₃₅ (n=17), C₁₈H₃₇ (n=18), C₁₉H₃₉ (n=19) und C₂₀H₄₁ (n=20).

Im Sinne der vorliegenden Erfindung umfassen R und R' unabhängig voneinander sowohl unverzweigte als auch verzweigte Kohlenwasserstoffreste.

In einer bevorzugten Ausgestaltung des erfindungsgemäßen Verfahrens ist R = R' = CH₃ oder C₂H₅ oder C₃H₇.

In einer alternativen bevorzugten Ausgestaltung des erfindungsgemäßen Verfahrens ist R = CH₃ und R' = C₂H₅.

In einer weiteren, unabhängig bevorzugten Ausgestaltung des erfindungsgemäßen Verfahrens ist M = Li oder M = Na.

In einer weiteren, unabhängig bevorzugten Ausgestaltung des erfindungsgemäßen Verfahrens ist X = Cl.

In einer weiteren, unabhängig bevorzugten Ausgestaltung des erfindungsgemäßen Verfahrens wird Schritt b) in einem organischen Lösungsmittel, bevorzugt in Squalan oder Dodecylbenzol, durchgeführt.

In einer alternativen, unabhängig bevorzugten Ausgestaltung des erfindungsgemäßen Verfahrens wird Schritt b) nicht in einem chemisch inerten Lösungsmittel durchgeführt. Chemisch inert ist ein Lösungsmittel, das unter den jeweilig gegebenen Bedingungen mit potentiellen Reaktionspartnern nicht reagiert.

Besonders bevorzugt ist die Durchführung in einem Amin, z. B. Dimethylamin, als Lösungsmittel, wobei M[Al(NRR')₄] *in situ* in überschüssigem Amin hergestellt und direkt weiter umgesetzt oder M[Al(NRR')₄] in flüssigem Amin mit dem gewünschten Elementhalogenid umgesetzt wird.

In einer weiteren, unabhängig bevorzugten Ausgestaltung des erfindungsgemäßen Verfahrens werden Schritt a) und Schritt b) in einem Temperaturbereich von -80 °C bis 0 °C, besonders bevorzugt in einem Temperaturbereich von -60 °C bis -20 °C, durchgeführt.

In einer alternativen, unabhängig bevorzugten Ausgestaltung des erfindungsgemäßen Verfahrens wird Schritt b) in einem Temperaturbereich von 0 °C bis 150 °C, besonders bevorzugt in einem Temperaturbereich von 20 °C bis 100 °C, durchgeführt.

In einer weiteren, unabhängig bevorzugten Ausgestaltung des erfindungsgemäßen Verfahrens wird in Schritt b) nach erfolgter Umsetzung das Endprodukt E(NRR')ₓ durch Extraktion mit einem Kohlenwasserstoff, vorzugsweise Pentan oder Hexan, gewonnen.

In einer weiteren, unabhängig bevorzugten Ausgestaltung des erfindungsgemäßen Verfahrens wird nach Schritt a) und vor Schritt b) überschüssiges Amin HNRR' entfernt.

Das erfindungsgemäße Verfahren erlaubt es, Dialkylamine zu aktivieren, indem die Amine mit Alkali-Tetrahydridoaluminaten M[AlH₄] als preisgünstige Basen zu Alkali-Tetrakis(dialkylamino)aluminaten M[Al(NRR')₄] und Wasserstoff abreagieren (Schritt a).

Im Allgemeinen gilt, dass die Umsetzung in Schritt a) in Gegenwart eines Überschusses an Dialkylamin empfehlenswert ist. Für Li[Al(NMe₂)₄] und Na[Al(NMe₂)₄] kann, um eine unkontrollierbare Gasentwicklung zu vermeiden, das Reaktionsgemisch langsam erwärmt werden. Die Reaktionstemperatur sollte deshalb so lange bei -45 °C gehalten werden, bis die Gasentwicklung abgeklungen ist. Zur Synthese von Li[Al(NEt₂)₄] und Na[Al(NEt₂)₄] werden dagegen Reaktionstemperaturen bis zum Siedepunkt vom eingesetzten Diethylamin verwendet.

Weiterhin sind Li[Al(NMe₂)₄] und Na[Al(NMe₂)₄] einfach und vorteilhaft durch Lösen in flüssigem Amin kontrolliert darstellbar. Besonders vorteilhaft ist der Einsatz von M[AlH₄] in Form gepresster Tabletten anstelle von Pulver, da sich die Tabletten in siedendem Amin wie eine Brausetablette auflösen, was einen Sicherheitsgewinn bedeutet. Ein organisches Lösungsmittel außer dem Amin selbst wird nicht benötigt. Als besonderer Vorteil ist hervorzuheben, dass das eingesetzte Amin vollständig, ohne Trennprobleme mit anderen Lösungsmitteln, in den Reaktionskreislauf zurückgeführt werden kann.

Eine Reduktion des Elementhalogenids oder eine At-Komplexbildung des Zielamids wird bei Verwendung von M[Al(NRR')₄] als Amidüberträger (Schritt b) nicht beobachtet. Die Verbindungen M[Al(NRR')₄] sind deutlich besser löslich als die im Stand der Technik verwendeten Lithiumamide, und sie reagieren auch mit Elementhalogeniden ohne weiteres Lösungsmittel weniger exotherm als Lithiumamide.

Für die Umsetzung der Zwischenprodukte M[Al(NRR')₄] mit Elementhalogeniden EXₓ, vorzugsweise Elementchloriden EClₓ, in Schritt b) haben sich folgende Varianten des erfindungsgemäßen Verfahrens bewährt.

### Variante 1: (Beispiele 7,8,13)

M[Al(NRR')₄] in organischem Lösungsmittel vorlegen, bevorzugt Toluol oder Squalan, und bei tiefen Temperaturen, -30 bis 0 °C, das Elementhalogenid zugeben. Bei Bedarf wird das Reaktionsgemisch noch einige Zeit gerührt, bis zu 72 h, um die Reaktion zu vervollständigen, meist zuerst bei Reaktionstemperatur und anschließend bei Raumtemperatur, je nach eingesetztem Amin und Elementhalogenid. Es ist aber auch eine höhere Reaktionstemperatur denkbar. Anschließend kann das Produkt E(NRR')ₓ durch Destillation, optional bei vermindertem Druck, oder Sublimation isoliert werden.

Eine besonders vorteilhafte Variante ist die Generierung von Li[Al(NMe₂)₄] in HNMe₂ mit Rückgewinnung des überschüssigen Amins, gefolgt von der Suspendierung des Li[Al(NMe₂)₄] in einem hochsiedenden Kohlenwasserstoff, z. B. Squalan, gefolgt von der Umsetzung mit EXₓ und Isolierung des Produktes E(NRR')ₓ. In dieser Variante besteht keine Notwendigkeit der Abtrennung fester Anteile.

### Variante 2: (Beispiele 9,10,11)

Diese Variante wird besonders bevorzugt bei Lewis-aciden, als Feststoff etwas schwerer löslichen, jedoch in dem Amin HNRR' durch Komplexbildung deutlich besser löslichen Elementchloriden, insbesondere wenn sie thermisch empfindliche Elementamide liefern, z. B. ZrCl₄, SbCl₃, BiCl₃, TaCl₅.

Hierbei wird nach der in situ Generierung von M[Al(NRR')₄] durch Lösen von M[AlH₄] in dem Amin bei tiefen Temperaturen zwischen -80 bis 0 °C (ggf. Rückflussbedingungen bei HNMe₂) das Elementhalogenid EXₓ ohne Entfernung des überschüssigen Amins zur Aminlösung des Reagenzes M[Al(NRR')₄] hinzugefügt. Das Amin dient als Lösungsmittel, Reaktionsvermittler, Adduktbildner und Base. Alternativ kann auch M[Al(NRR')₄] erst isoliert und später mit neuem Amin in der Reaktion eingesetzt werden. Das Reaktionsgemisch kann zur Vervollständigung der Reaktion noch bei Reaktionstemperatur gerührt werden. Anschließend wird überschüssiges Amin entfernt, z. B. im Fall von Dimethylamin durch Erwärmen des Reaktionsgemisches auf Raumtemperatur. In einigen Fällen kann es jedoch von Vorteil sein, das Amin noch bei Reaktionstemperatur oder Temperaturen <0 °C aus dem Reaktionsgemisch zu entfernen um eine Rückreaktion des Produktes E(NRR')ₓ mit entstehendem Li[AlX₄] zu E(NRR')_{x-z}X_{z} Spezies zu verhindern. Nach Abdampfen und Rückgewinnung des überschüssigen Amins wird ein leichtsiedender Kohlenwasserstoff, etwa Pentan oder Hexan, zu der Reaktionsmischung gegeben und das Reaktionsprodukt durch Extraktion und einfache Dekantierung der Kohlenwasserstoff-Lösung abgetrennt. In besonderen Fällen wird das Produkt gelöst in dem Amin einfach von dem vergleichsweise unlöslichen Salz M[AlCl₄] durch Dekantierung abgetrennt und destillativ aufgearbeitet. Eine Filtration ist in der Regel nicht notwendig. Das Extraktionsmittel wird abgedampft und zurückgewonnen und das Extrakt im Vakuum fraktioniert destilliert. Alternativ kann nach der Entfernung des Amins das Produkt E(NRR')x durch Sublimation oder Destillation, optional mit vermindertem Druck, aus dem Reaktionsrückstand isoliert werden.

### Variante 3:

Bei dieser Variante wird eine Mischung Li[AlH₄] und Na[AlH₄] zunächst in dem Amin HNRR' zu einer Mischung von M[Al(NRR')₄] (M = Li bzw. Na) umgesetzt, nach vollständigem Umsatz wird das Metallchlorid MClₓ bei -40 °C zu dieser Mischung gegeben und die Mischung innerhalb von 5 h auf 30 °C erwärmt. Dabei dampft im Fall von Dimethylamin das Amin weitgehend ab. In der zurückbleibenden Schmelzmischung lässt sich das gebildete Metallamid NMR-spektroskopisch in guter Ausbeute nachweisen.

Je nach Anwendungsfall kann es vorteilhaft sein, auch Verfahrensschritte und Merkmale aus Variante 1 mit Merkmalen aus Variante 2 bis 3 zu kombinieren, etwa falls sich das feste Metallchlorid in einer Schmelzmischung von M[Al(NRR')₄] und Stoffen zur Schmelzpunkterniedrigung zwar löst und umsetzt, jedoch als Elementamid thermisch zu empfindlich für eine direkte Abkondensation aus der nicht flüchtigen Salzschmelze ist.

### Variante 4:

Diese Variante wird besonders bevorzugt bei flüchtigen und thermisch stabilen Elementamiden. Beispiel 12 illustriert diese Variante näher.

Hierbei wird das Elementchlorid direkt mit dem Zwischenprodukt M[Al(NRR')₄] in Kontakt gebracht. Eine kontrollierbar exotherme Reaktion findet statt, durch Schmelzpunkterniedrigung kommt es zum Schmelzen der Mischung oder die Mischung wird aufgeschmolzen und während des Aufschmelzens beginnt die exotherme Reaktion. Die Reaktionstemperatur wird vorzugsweise unter der Zersetzungstemperatur der reinen M[Al(NRR')₄]-Phase eingestellt. Zur Verbesserung der Rührbarkeit und Herabsetzung der Viskosität und zur besseren Wärmeabfuhr ist es in einigen Anwendungsfällen von Vorteil, dieser Schmelzmischung ein organisches Verdünnungsmittel zu 1-300% Volumenanteilen, bevorzugt einen hochsiedenden Kohlenwasserstoff, wie etwa Squalan oder Dodecylbenzol, hinzuzufügen. Die Reaktionstemperatur liegt in einem Bereich von 0°C bis 160°C, insbesondere von Raumtemperatur (20°C) bis 120°C, oder bei 20°C bis 160 °C.

Nach erfolgter Ligand-Metathese wird das flüchtige Produkt im Unterdruck von dem Gemisch aus Salzschmelze (und ggf. nicht flüchtigem Kohlenwasserstoff) abkondensiert und optional weiter aufgereinigt. Filtrationen oder ähnliche Trennverfahren unter Stickstoff werden bei Variante 4 nicht benötigt.

Dier Erfindung wird anhand der nachfolgenden Beispiele näher erläutert.

### Beispiele

### Beispiel 1: Darstellung von Li[Al(NMe₂)₄] ausgehend von umkristallisiertem LiAlH₄

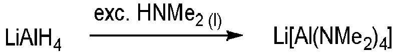

LiAlH₄ (1.00 g, 26.4 mmol, 1.0 eq) wurde aus Et₂O umkristallisiert und anschließend wurde das Lösungsmittel bei 100 °C und 10⁻² mbar entfernt. Der farblose Feststoff wurde in einen Schlenkkolben mit Teflonventil eingewogen. Unter Kühlung mit flüssigem Stickstoff wurde HNMe₂ (17.3 g, 383 mmol, 14.5 eq) einkondensiert. Unter Vakuum wurde der Schlenkkolben zunächst im Trockeneisbad auf -60 °C erwärmt. Bei dieser Temperatur fand keine Reaktion statt und LiAlH₄ liegt ungelöst vor. Das Reaktionsgemisch wurde weiter langsam erwärmt, wobei bei einer Temperatur von circa -50 °C eine Gasentwicklung zu beobachten war. Außerdem löste sich LiAlH₄ langsam im flüssigen HNMe₂. Im Trockeneisbad wurde das Reaktionsgemisch für 1 h bei einer Temperatur von -50 °C gehalten, bis die Gasentwicklung langsam abklang. Das Reaktionsgemisch wurde erwärmt und für 1 h bei RT gerührt, während überschüssiges HNMe₂ abdampfte. Nach Anlegen von Vakuum (ca. 10⁻³ mbar) für circa 2 min wurde ein farbloser Feststoff erhalten, welcher für 1 h bei 55 °C im Vakuum (ca. 10⁻³ mbar) getrocknet wurde. Die Gesamtausbeute wurde durch Zurückwiegen des Kolbens mit 98 % bestimmt. Die isolierte Ausbeute betrug 89% (4.91 g, 23.4 mmol).
**¹H-NMR (THF-d₈, 300 MHz, 300 K):** δ / ppm = 2.49 (s, 24 H, N*Me₂*).
**¹³C-NMR (THF-d₈, 75 MHz, 300 K):** δ / ppm = 42.7 (N*Me₂*).
**⁷Li-NMR (THF-d₈, 155 MHz, 300 K):** δ / ppm = -0.07 (*Li*[Al(NMe₂)₄]).
**²⁷Al-NMR (THF-d₈, 130 MHz, 300 K):** δ / ppm = 110.1 (Li[*Al*(NMe₂)₄]).
**Elementaranalyse:** für C₈H₂₄Al₁Li₁N₄.
berechnet: C: 45.71 %, H: 11.51 %, N: 26.65 %.
gefunden: C: 43.22 %, H: 10.60 %, N: 25.53 %.
**HR-EI-MS:** berechnet für C₈H₂₄Al₁Li₁N₄: 210.1976 *m*/*z,* gefunden: 210.1966 *m*/*z.*
**IR:** *υ̃*/cm⁻¹ = 2935 (s), 2817 (m), 2770 (m), 1447 (s), 1242 (m), 1134 (st), 1058 (m),
932 (vst), 840 (m), 624 (st), 602 (vst), 412 (vst).

### Beispiel 2: Darstellung von Li[Al(NMe₂)₄] ausgehend von gemörserten LiAlH₄ Pellets

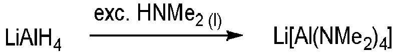

LiAlH₄ (1.51 g, 39.7 mmol, 1.00 eq; kommerziell erwerbliche Pellets, vor Gebrauch inert gemörsert) wurde in einem Schlenkkolben mit Teflonventil vorgelegt. Unter Kühlung mit flüssigem Stickstoff wurde HNMe₂ (39.1 g, 870 mmol, 21.9 eq) einkondensiert. Das Reaktionsgemisch wurde im Trockeneisbad zunächst auf -60 °C erwärmt. Bei dieser Temperatur fand noch keine Reaktion statt. Im Trockeneisbad wurde das Reaktionsgemisch stufenweise weiter erwärmt wobei ab -50 °C eine leichte Gasentwicklung einsetzte. Die leicht trübe Lösung wurde für 2 h bei dieser Temperatur gerührt und anschließend auf RT erwärmt. Durch kurzes Anlegen von Vakuum wurde ein farbloser, leicht grauer Feststoff erhalten. Dieser wurde 30 min im Vakuum (ca. 10⁻³ mbar) getrocknet. Die Gesamtausbeute konnte durch Rückwiegen des Schlenkkolbens mit 99% (8.25 g, 39.3 mmol) bestimmt werden. Das Produkt konnte mit einer Ausbeute von 94% (7.83 g, 37.3 mmol) isoliert, inert gemörsert und in Form eines nicht pyrophoren Feststoffs erhalten werden.
**¹H-NMR (THF-d₈, 300 MHz, 300 K):** δ / ppm = 2.49 (s, 24 H, N*Me₂*).
**¹³C-NMR (THF-d₈, 75 MHz, 300** K): δ / ppm = 42.7 (N*Me₂*).
**⁷Li-NMR (THF-d₈, 155 MHz, 300 K):** δ / ppm = -0.09 (*Li*[Al(NMe₂)₄]).
**²⁷Al-NMR (THF-d₈, 130 MHz, 300 K):** δ / ppm = 110.1 (Li[*Al*(NMe₂)₄]).
**Elementaranalyse:** für C₈H₂₄Al₁Li₁N₄.
berechnet: C: 45.71 %, H: 11.51 %, N: 26.65 %.
gefunden: C: 44.78 %, H: 11.20 %, N: 26.74 %.
**IR:** *υ̃*/cm⁻¹ = 2934 (s), 2817 (m), 2769 (m), 1447 (s), 1412 (s), 1241 (m), 1133 (st),
1057 (m), 930 (vst), 624 (st), 599 (vst).

### Beispiel 3: Darstellung Na[Al(NMe₂)₄] ausgehend von NaAlH₄

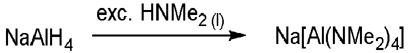

NaAlH₄ (2.24 g, 41.4 mmol, 1.00 eq; ACROS, 93%) wurde in einem Schlenkkolben vorgelegt und mit flüssigem Stickstoff gekühlt. Es wurde HNMe₂ (29.5 g, 650 mmol, 15.8 eq) einkondensiert. Das Reaktionsgemisch wurde im Trockeneisbad zunächst auf -60 °C erwärmt, wobei keine Reaktion beobachtet wurde. Die Temperatur wurde langsam schrittweise erhöht, bis bei einer Temperatur von -45 °C eine Gasentwicklung einsetzte, während NaAlH₄ langsam in Lösung ging. Das Gemisch wurde für 2 h bei dieser Temperatur gerührt, bis keine Gasentwicklung mehr zu beobachten war. Anschließend wurde die Lösung vorsichtig auf RT erwärmt, wobei überschüssiges HNMe₂ abdampfte. Der erhaltene farblose Feststoff konnte durch Anlegen von Vakuum erhalten werden. Dieser wurde für 1 h im Vakuum (ca. 10⁻³ mbar) bei RT getrocknet und anschließend inert gemörsert. Das gewünschte Produkt konnte mit einer Gesamtausbeute von 98% (9.18 g, 40.6 mmol) und einer isolierten Ausbeute von 88% (8.25 g, 36.4 mmol) erhalten werden. Bei dem Produkt handelt es sich um einen leicht grauen, nicht pyrophoren Feststoff.
**¹H-NMR (THF-d₈, 300 MHz, 300 K):** δ / ppm = 2.49 (s, 24 H, N*Me₂*).
**¹³C-NMR (THF-d₈, 75 MHz, 300 K):** δ / ppm = 42.9 (N*Me₂*).
**²⁷Al-NMR (THF-d₈, 130 MHz, 300 K):** δ / ppm = 109.9 (Na[*Al*(NMe₂)₄]).
**Elementaranalyse:** für C₈H₂₄Al₁Na₁N₄.
berechnet: C: 42.46 %, H: 10.69 %, N: 24.76 %.
gefunden: C: 39.03 %, H: 9.65 %, N: 23.11 %.
**IR:** *υ̃*/cm⁻¹ = 2933 (s), 2859 (s), 2805 (m), 2757 (m), 1461 (s), 1447 (s), 1409 (s),
1244 (m), 1138 (st), 1059 (m), 936 (vst), 695 (s), 652 (s), 600 (vst) 410 (st).
**Beispiel 4: Synthese von Li[AlH(NEt₂)₃]**

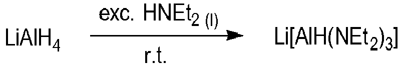

LiAlH₄ (600 mg, 15.8 mmol, 1.00 eq) wurde vorgelegt und auf -60 °C gekühlt. Flüssiges HNEt₂ (15 mL, 146 mmol, 9.24 eq) wurde auf -30 °C vorgekühlt und langsam zugegeben. Dabei fror HNEt₂ (Smp = -50 °C) zunächst ein. Das Reaktionsgemisch wurde auf -50 °C erwärmt, wobei sich HNEt₂ verflüssigte und LiAlH₄ langsam löste. Bei einer Temperatur von -40 °C konnte eine Gasentwicklung beobachtet werden, welche gut kontrollierbar war. Das Reaktionsgemisch wurde für 1 h bei -30 °C gerührt, anschließend auf RT erwärmt. Dabei entstand eine farblose, leicht trübe Lösung. Überschüssiges HNEt₂ wurde im Vakuum (ca. 10⁻³ mbar) entfernt, wodurch ein farbloser Feststoff isoliert werden konnte. Dieser wurde für 1 h bei einer Temperatur von 60 °C getrocknet. Die isolierte Ausbeute betrug 89 % (3.55 g, 14.1 mmol).
**¹H-NMR (THF-d₈, 300 MHz, 300 K):** δ / ppm = 0.96 (t, *³J_{HH}* = 7.0 Hz, 18 H, CH₂*CH₃*), 2.90 (*³J_{HH}* = 7.1 Hz, 12 H, *CH₂*CH₃).
**¹³C-NMR (THF-d₈, 75 MHz, 300 K):** δ / ppm = 16.2 (CH₂*CH₃*), 42.3 (*CH₂*CH₃).
**⁷Li-NMR (THF-d₈, 155 MHz, 300 K):** δ / ppm = -0.22 (*Li*[AlH(NEt₂)₃]).
**²⁷Al-NMR (THF-d₈, 130 MHz, 300 K):** δ / ppm = 117.6 (Li[*Al*H(NEt₂)₃]).
**Elementaranalyse:** für C₁₂H₃₁Al₁Li₁N₃.
berechnet: C: 57.35 %, H: 12.43 %, N: 16.72 %.
gefunden: C: 56.49 %, H: 11.89 %, N: 16.67 %.
**IR:** *υ̃*/cm⁻¹ = 2958 (m), 2928 (s), 2883 (s), 2840 (s), 1647 (brs), 1445 (s), 1366 (m),
1343 (s), 1181 (m), 1148 (vst), 1105 (s), 1045 (s), 1005 (st), 896 (m), 872 (st), 789 (st), 698 (vst), 634 (m), 584 (s), 499 (m), 467 (m).

### Beispiel 5: Darstellung von Li[Al(NEt₂)₄]

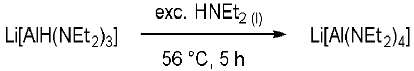

Li[AlH(NEt₂)₃] (500 mg, 1.99 mmol, 1.00 eq) wurde vorgelegt und bei RT mit HNEt₂ (5.0 mL, 48.3 mmol, 24.3 eq) versetzt. Das Reaktionsgemisch wurde für 5 h auf 56 °C erhitzt, wobei eine Gasentwicklung beobachtet werden konnte. Mittels IRspektroskopischer Reaktionskontrolle wurde die Vollständigkeit der Reaktion, anhand der fehlenden Al-H-Bande bei -1650 cm⁻¹, überprüft. Überschüssiges HNEt₂ wurde im Vakuum (ca. 10⁻³ mbar) bei RT entfernt. Der farblose, ölige Rückstand wurde anschließend im Vakuum (ca. 10⁻³ mbar) bei 100 °C getrocknet, danach wurde das Rohprodukt bei 3.4·10⁻⁷ mbar und 80 °C getrocknet. Hierdurch konnte der Anteil an freiem HNEt₂ auf 6% relativ zum Li[Al(NEt₂)₄] reduziert werden. Das Produkt konnte als farbloser Feststoff mit einer Gesamtausbeute von 97% (622 mg, 1.93 mmol) erhalten werden.
**¹H-NMR (THF-d₈, 300 MHz, 300 K):** *δ* / ppm = 0.96 (t, ³*J*_{HH} = 6.9 Hz, 24 H, CH₂C*H₃*), 2.89 (q, ³*J*_{HH} = 6.9 Hz, 16 H, C*H₂*CH₃).
**⁷Li-NMR (THF-d₈, 194 MHz, 300 K):** *δ* / ppm = -0.33 (s).
**²⁷Al-NMR (THF-d₈, 130 MHz, 300 K):** *δ* / ppm = 107.5 (s).
**IR:** *υ̃* / cm⁻¹ = 2954 (st), 2923 (m), 2860 (m), 2835 (m), 2789 (m), 2684 (w), 1451 (w),
1366 (st), 1339 (w), 1285 (w), 1260 (w), 1173 (vst), 1143 (vst), 1096 (m), 1067 (m), 1042 (m), 1011 (vst), 936 (m), 890 (st), 866 (st), 829 (m), 781 (vst), 688 (w), 644 (m), 622 (m), 573 (st), 517 (m), 470 (m), 408 (w).

### Beispiel 6: Darstellung von Na[Al(NEt₂)₄]

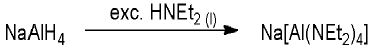

NaAlH₄ (50 mg, 0.926 mmol, 1.00 eq) wurde vorgelegt, auf -50 °C gekühlt und langsam mit HNEt₂ (1.5 mL, 14.6 mmol, 15.7 eq) versetzt. Das Reaktionsgemisch wurde zunächst 1 h bei -50 °C, anschließend 1 h bei RT und letztendlich 4 h auf 56 °C gerührt. Mittels IR-Reaktionskontrolle wurde die Vollständigkeit der Reaktion überprüft. Das Lösungsmittel wurde im Vakuum (ca. 10⁻³ mbar) entfernt und der Rückstand in *n*Pentan digeriert. Alle flüchtigen Bestandteile wurden im Vakuum (ca. 10⁻³ mbar) entfernt und der farblose Feststoff bei 5·10⁻⁵ mbar getrocknet. Das Produkt wurde mit einer Ausbeute von 96% (301 mg, 0.889 mmol) erhalten.
**¹H-NMR (THF-d₈, 300 MHz, 300 K):** *δ* / ppm = 0.94 (t, ³*J*_{HH} = 6.9 Hz, 24 H, CH₂C*H₃*), 2.90 (q, ³*J*_{HH} = 6.9 Hz, 16 H, C*H₂*CH₃).
**¹³C-NMR (THF-d₈, 75 MHz, 300 K):** *δ* / ppm = 16.7 (CH₂*C*H₃), 42.7 (*C*H₂*C*H₃).
**²⁷Al-NMR (THF-d₈, 130 MHz, 300 K):** *δ* / ppm = 107.8 (s).
**IR:** *υ̃* / cm⁻¹ = 2953 (m), 2922 (m), 2859 (m), 2792 (m), 2683 (w), 1452 (w), 1364 (m),
1339 (w), 1285 (w), 1261 (w), 1174 (st), 1097 (st), 1068 (m), 1039 (m), 1004 (vst), 928 (w), 886 (m), 870 (st), 837 (w), 789 (st), 614 (st), 470 (m), 427 (m).
**Elementaranalyse:** für C₁₆H₄₀AlNaN₄
berechnet: C: 56.77%, H: 11.91%, N: 16.55%.
gefunden: C: 54.18%, H: 11.60%, N: 15.39%.
**HR-EI-MS:** berechnet für C₁₆H₄₀AlN₄: 315.3068 m/z, gefunden: 315.3057 m/z.
**Schmelzpunkt:** 162 °C (optisch, 5 °C / min).

### Beispiel 7: Synthese von P(NMe₂)₃

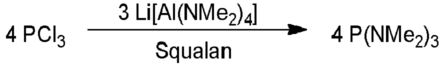

Li[Al(NMe₂)₄] (200 mg, 0,95 mmol, 0.75 eq) wurde in 8 mL Squalan suspendiert und auf 0 °C gekühlt. Es wurde PCl₃ (174 mg, 1.27 mmol, 1.00 eq) tropfenweise zugegeben. Das Reaktionsgemisch wurde 1 h bei einer Temperatur von 0 °C gerührt und anschließend auf RT erwärmt und für 16 h gerührt. Der ausgefallene gräuliche Niederschlag wurde abgetrennt und das Produkt unter vermindertem Druck (10⁻² mbar) bei 50 °C aus dem Filtrat kondensiert. P(NMe₂)₃ wurde mit einer Ausbeute von 73% (151 mg, 0.93 mmol) erhalten.
**¹H-NMR (C₆D₆, 300 MHz, 300 K):** *δ* / ppm = 2.45 (d, *³J_{HP}* = 9.0 Hz, N*Me₂*).
**¹³C-NMR (C₆D₆, 75 MHz, 300 K):** *δ* / ppm = 42.9 (*²J_{CP}* = 18.9 Hz, N*Me₂*).
**³¹P-NMR (C₆D₆, 101 MHz, 300 K):** *δ* / ppm = 123.1.

### Beispiel 8: Synthese von [Ti(NMe₂)₄]

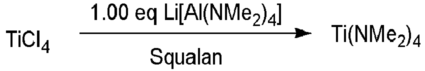

Li[Al(NMe₂)₄] (111 mg, 0.53 mmol, 1.00 eq) wurde in 5 mL Squalan vorgelegt. Bei 0 °C wurde TiCl₄ (100 mg, 0.53 mmol, 1.00 eq) tropfenweise zugegeben. Dabei war umgehend ein Farbwechsel des Reaktionsgemisches von farblos zu dunkelgelb zu beobachten. Das Reaktionsgemisch wurde auf RT erwärmt und für weitere 16 h gerührt.

Aus dem Reaktionsgemisch wurde das gewünschte Produkt unter vermindertem Druck bei 60 °C als leicht gelbe Flüssigkeit mit einer Ausbeute von 69% (82 mg, 0.366 mmol) kondensiert.
**¹H-NMR (C₆D₆, 300 MHz, 300 K):** δ / ppm = 3.11 (s, 24 H, N*Me₂*).
**¹³C-NMR (C₆D₆, 75 MHz, 300 K):** δ / ppm = 43.9 (N*Me₂*).

### Beispiel 9: Synthese von [Zr(NMe₂)₄]

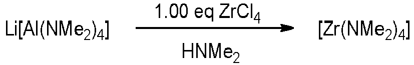

Li[Al(NMe₂)₄] (204 mg, 0.970 mmol, 1.00 eq) wurde in flüssigem HNMe₂ vorgelegt und langsam auf -40 °C erwärmt. ZrCl₄ (226 mg, 0.970 mmol, 1.00 eq) wurde portionsweise zugegeben, wobei ein Farbwechsel von farblos zu leicht gelb beobachtet werden konnte. Das Reaktionsgemisch wurde für 1 h bei -40 °C gerührt und anschließend bei -40 °C im Vakuum (ca. 10⁻³ mbar) von überschüssigem Amin befreit. Der leicht gelbe Rückstand wurde auf RT erwärmt und das Produkt im Vakuum (ca. 10⁻³ mbar) bei 45 °C aus dem Rückstand sublimiert. [Zr(NMe₂)₄] wurde mit einer Ausbeute von 81% (210 mg, 0.786 mmol) in Form von farblosen Kristallen erhalten.

*Die Reaktion kann auch ausgehend von LiAlH₄ bzw. NaAlH₄, welches in HNMe₂ in situ umgesetzt wird, oder ausgehend von zuvor isoliertem Na[Al(NMe₂)₄] durchgeführt werden.*
**¹H-NMR (C₆D₆, 300 MHz, 300 K):** *δ* / ppm = 2.97 (s).
**¹³C-NMR (C₆D₆, 75 MHz, 300 K):** *δ* / ppm = 41.6 (s).
**HR-EI-MS:** berechnet für C₈H₂₄N₄Zr: 266.1048 *m*/*z,* gefunden: 266.1050 *m*/*z.*

### Beispiel 10: Synthese von [Ta(NMe₂)₅]

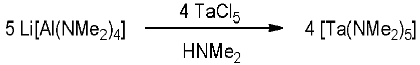

Li[Al(NMe₂)₄] (222 mg, 1.06 mmol, 5.00 eq) wurde in flüssigen HNMe₂ vorgelegt und langsam auf -40 °C erwärmt. TaCl₅ (303 mg, 0.845 mmol, 4.00 eq) wurde portionsweise zugegeben, wobei ein Farbwechsel von farblos zu orange beobachtet wurde. Das Reaktionsgemisch wurde für 1 h bei -40 °C gerührt und anschließend bei -40 °C im Vakuum (ca. 10⁻³ mbar) von überschüssigem Amin befreit. Der Rückstand wurde auf RT gebracht und das Produkt bei 40 °C im Vakuum (ca. 10⁻³ mbar) heraus sublimiert. [Ta(NMe₂)₅] wurde in Form oranger Kristalle mit einer Ausbeute von 77% (261 mg, 0.651 mmol) erhalten.

*Die Reaktion kann auch ausgehend von LiAlH₄ bzw. NaAlH₄, welches in HNMe₂ in situ umgesetzt wird, oder ausgehend von Na[Al(NMe₂)₄] durchgeführt werden.*
**¹H-NMR (C₆D₆, 300 MHz, 300 K):** *δ* / ppm = 3.26 (s).
**¹³C-NMR (C₆D₆, 75 MHz, 300 K):** *δ* / ppm = 43.1 (s).
**HR-EI-MS:** berechnet für C₈H₂₄N₄Ta: 357.1481 *m*/*z,* gefunden: 357.1497 *m*/*z.*

### Beispiel 11: Synthese von [Al(NEt₂)₃]

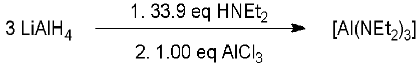

LiAlH₄ (50 mg, 1.32 mmol, 3.00 eq) wurde vorgelegt und mit HNEt₂ (1.09 g, 14.9 mmol, 33.9 eq) versetzt. Das suspensionsartige Reaktionsgemisch wurde für 2 h zum Sieden erhitzt, auf 0 °C gekühlt und mit AlCl₃ (59 mg, 0.440 mmol, 1.00 eq) versetzt. Das Reaktionsgemisch wurde für 1 h bei 0 °C und für 16 h bei RT gerührt, bevor 10 mL nHexan zugegeben wurden. Die Suspension wurde filtriert und das farblose Filtrat bis zur Trockene eingedampft, wobei das Produkt in Form eines farblosen Öls erhalten wurde. Die Ausbeute betrug 90% (386 mg, 1.58 mmol).
**¹H-NMR (C₆D₆, 300 MHz, 300 K):** *δ* / ppm = 1.24 (t, ³*J*_{HH} = 6.7 Hz, 18 H, CH₂C*H₃*), 3.12 (q, ³*J*_{HH} = 6.7 Hz, 12 H, C*H₂*CH₃).
**¹³C-NMR (C₆D₆, 75 MHz, 300 K):** *δ* / ppm = 12.7 (CH₂*C*H₃), 39.9 (*C*H₂*C*H₃).
**²⁷Al-NMR (C₆D₆, 130 MHz, 300 K):** *δ* / ppm = 117.8 (s).

### Beispiel 12: Synthese von [Al(NEt₂)₃]

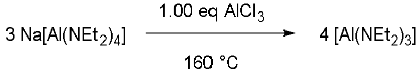

Na[Al(NEt₂)₄] (337 mg, 1.00 mmol, 3.00 eq) und AlCl₃ (44 mg, 0.33 mmol, 1.00 eq) wurden zusammen vorgelegt und ohne Zugabe von Lösungsmittel aufgeschmolzen. Dabei entstand aufgrund der Reaktion und damit einhergehenden Schmelzpunkterniedrigung bereits ab 130°C eine farblose Schmelze, in der etwas unlösliches NaCl suspendiert ist. Nach 1 h bei 160°C wurde das flüchtige Produkt [Al(NEt₂)₃] im Vakuum (10⁻³ mbar) aus der Schmelze abkondensiert. Die Ausbeute betrug > 90%.
**¹H-NMR (C₆D₆, 300 MHz, 300 K):** *δ* / ppm = 1.24 (t, ³*J*_{HH} = 6.7 Hz, 18 H, CH₂C*H₃*), 3.12 (q, ³*J*_{HH} = 6.7 Hz, 12 H, C*H₂*CH₃).

### Beispiele 13

Die folgenden Synthesen von Si(NMe₂)₄ (Beispiel 13a) und E(NMe₂)₃ (mit E = As (Beispiel 13b), Sb (Beispiel 13c), Bi (Beispiel 13d)) wurden ausgehend von einem mmol Li[Al(NMe₂)₄] ohne Isolierung der Produkte in einem NMR-Röhrchen durchgeführt:

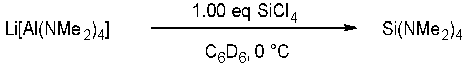

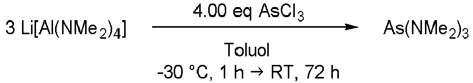

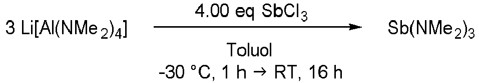

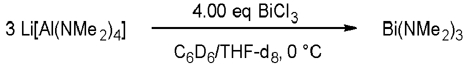

Die chemische Verschiebung der jeweils in Lösung vorliegenden Produkte wurde mit Literaturdaten und Referenzproben verglichen, wodurch die Produkte identifiziert wurden. Die Isolierung von Si(NMe₂)₄ und As(NMe₂)₃ aus Toluol war aufgrund der hohen Flüchtigkeit, sowie der kleinen Ansatzgrößen nicht möglich. Sb(NMe₂)₃ und Bi(NMe₂)₃ konnten ebenfalls nachgewiesen werden, jedoch handelt es sich bei beiden Verbindungen um sehr instabile, vor allem lichtempfindliche Substanzen, weswegen auch in diesem Fall keine Isolierung erfolgte. Generell zeigen die Dimethylamido-substituierten Spezies der Hauptgruppenelemente keine Tendenz zu einer Rückreaktion zu gemischt-substituierten Verbindungen. Die Umsetzungen wurden nicht optimiert, verlaufen jedoch bei sorgfältiger Reaktionskontrolle und exakter Stöchiometrie ähnlich wie im Fall von P(NMe₂)₃ sehr selektiv und nahezu quantitativ. Ausbeuteverluste werden insbesondere bei der Isolierung der nachgewiesenen Produkte erwartet.
**Si(NMe₂)₄: ¹H-NMR (C₆D₆, 300 MHz, 300 K):** *δ* / ppm = 3.26 (s).^{[1]}
**As(NMe₂)₃: ¹H-NMR (C₆D₆, 300 MHz, 300 K):** *δ* / ppm = 2.61 (s).^{[2]}
**Sb(NMe₂)₃: ¹H-NMR (C₆D₆, 300 MHz, 300 K):** *δ* / ppm = 2.76 (s).^{[2]}
**Bi(NMe₂)₃: ¹H-NMR (C₆D₆/THF-d₈, 300 MHz, 300 K):** *δ*/ppm = 3.14 (s).^{[3]}
[1] Banerjee et al., Inorg. Chem. Commun. 2006, 9, 761-763. [2] Schumann, J. Organomet. Chem. 1986, 299, 169-178. [3] Ando et al., J. Inorg. Nucl. Chem. 1975, 37, 2011.

## Patentansprüche

1. Verfahren zur Herstellung von Verbindungen des Typs E(NRR')ₓ umfassend die folgenden Schritte:
a) Umsetzung von M[AlH₄] mit HNRR' zu M[Al(NRR')₄] und Wasserstoff;
b) Umsetzung von M[Al(NRR')₄] mit EXₓ zu E(NRR')ₓ und M[AlX₄],
wobei M = Li, Na oder K ist, R = CₙH₂ₙ₊₁ mit n = 1 bis 20 und unabhängig davon R' = CₙH₂ₙ₊₁ mit n = 1 bis 20 ist, E ein Element der Gruppe 3 bis 15 des Periodensystems der Element ist, X = F, Cl, Br oder I ist und z = 2, 3, 4 oder 5 ist.

2. Verfahren nach Anspruch 1, **dadurch gekennzeichnet, dass** R = R' = CH₃ oder C₂H₅ ist.

3. Verfahren nach Anspruch 1 oder 2, **dadurch gekennzeichnet, dass** M = Li oder Na ist.

4. Verfahren nach einem der Ansprüche 1 bis 3, **dadurch gekennzeichnet, dass** X = Cl ist.

5. Verfahren nach einem der Ansprüche 1 bis 4, **dadurch gekennzeichnet, dass** Schritt b) in einem organischen Lösungsmittel durchgeführt wird.

6. Verfahren nach einem der Ansprüche 1 bis 4, **dadurch gekennzeichnet, dass** Schritt b) in einem Amin als Lösungsmittel durchgeführt wird.

7. Verfahren nach einem der Ansprüche 1 bis 6, **dadurch gekennzeichnet, dass** Schritt b) in einem Temperaturbereich von -80 °C bis 160 °C, insbesondere - 40 °C bis 120°C oder von 0 °C bis 120 °C durchgeführt wird.

8. Verfahren nach einem der Ansprüche 1 bis 6, **dadurch gekennzeichnet, dass** in Schritt b) eine stöchiometrische Menge an M[Al(NRR')₄] eingesetzt und eine heteroleptische Verbindungen E(NRR')ₓX_{y}, in denen die Halogenidliganden nur teilweise durch Amidliganden ersetzt sind, erhalten wird.

9. Verfahren nach einem der Ansprüche 1 bis 8, **dadurch gekennzeichnet, dass** in Schritt b) nach erfolgter Umsetzung das Amin bei Temperaturen zwischen - 80 °C und 0 °C entfernt wird.

10. Verfahren nach einem der Ansprüche 1 bis 9, **dadurch gekennzeichnet, dass** in Schritt b) nach erfolgter Umsetzung durch Sublimation isoliert wird.

11. Verfahren nach einem der Ansprüche 1 bis 10, **dadurch gekennzeichnet, dass** nach Schritt a) und vor Schritt b) überschüssiges Amin HNRR' entfernt wird.

12. Verfahren nach einem der Ansprüche 1 bis 11 **dadurch gekennzeichnet, dass** Schritt a) in Gegenwart eines Überschusses an Amin HNRR' durchgeführt wird.
